Europäisches Patentamt

European Patent Office

Office européen des brevets

(19)

(11) **EP 0 885 646 B1**

(12) **FASCICULE DE BREVET EUROPEEN**

(45) Date de publication et mention
de la délivrance du brevet:
**02.05.2001 Bulletin 2001/18**

(51) Int Cl.⁷: **B01D 53/04**, B01D 53/047

(21) Numéro de dépôt: **98402113.9**

(22) Date de dépôt: **26.08.1998**

(54) **Granulométrie et épaisseur de lit d'une unité PSA**

Korngrösse und Betthöhe von einer Druckwechseladsorptionseinheit

Particle size and bed height of a pressure swing adsorption unit

(84) Etats contractants désignés:
**DE ES FR GB IT**

(30) Priorité: **28.08.1997 FR 9710745**

(43) Date de publication de la demande:
**23.12.1998 Bulletin 1998/52**

(73) Titulaire: **L'AIR LIQUIDE, SOCIETE ANONYME POUR
L'ETUDE ET L'EXPLOITATION DES PROCEDES
GEORGES CLAUDE
75007 Paris (FR)**

(72) Inventeurs:
- **Montfort, Christophe
  78530 Buc (FR)**
- **Rouge, Dominique
  92240 Malakoff (FR)**
- **Moreau, Serge
  78140 Velizy-Villacoublay (FR)**

(74) Mandataire: **Le Moenner, Gabriel
L'Air Liquide S.A.,
DSPI,
Service Brevets et Marques,
75 Quai d'Orsay
75321 Paris Cedex 07 (FR)**

(56) Documents cités:
**EP-A- 0 258 206          EP-A- 0 391 718
US-A- 4 194 892          US-A- 5 071 449**

- **DATABASE WPI Section Ch, Week 8730 Derwent
  Publications Ltd., London, GB; Class J01, AN
  87-212399 XP002072209 & SU 1 278 006 A
  (BLAZNIN YU P) , 23 décembre 1986**

Remarques:
Le dossier contient des informations techniques
présentées postérieurement au dépôt de la
demande et ne figurant pas dans le présent
fascicule.

**Description**

L'invention concerne un procédé de type PSA de séparation d'un flux gazeux contenant essentiellement de l'oxygène et de l'azote, tel l'air, par adsorption préférentielle de l'azote sur un matériau adsorbant, telle une zéolite, en vue de produire de l'oxygène ou un flux gazeux enrichi en oxygène, c'est-à-dire appauvri en azote.

L'oxygène est un gaz présentant un grand intérêt industriel car trouvant de multiples applications dans des domaines techniques très variés : fabrication de l'acier, du verre ou du papier, médecine, soudage de métaux, combustion ou dépollution, par exemples.

Une des techniques actuellement utilisées pour produire de l'oxygène est la technique dite "PSA" (pour Pressure Swing Adsorption). Dans le cadre de l'invention on entend par procédés PSA, non seulement les procédés PSA proprement-dits, mais aussi les procédés analogues, tels les procédés VSA (Vacuum Swing Adsorption) ou MPSA (Mixed Pressure Swing Adsorption).

Selon cette technique PSA, l'oxygène contenu dans un mélange gazeux comprenant essentiellement de l'oxygène et de l'azote, tel l'air, est séparé dudit mélange gazeux grâce à une adsorption de l'azote sur un matériau adsorbant préférentiellement l'azote, ladite adsorption de l'azote étant effectuée par variation de la pression appliquée dans la zone de séparation contenant ledit matériau adsorbant; l'oxygène ne s'adsorbant pas ou peu est récupéré en sortie de ladite zone de séparation.

De tels procédés PSA ont déjà été décrits à maintes reprises dans l'art antérieur. De façon schématique, un procédé PSA comprend toujours:

- une étape d'adsorption sélective de l'azote sur un matériau adsorbant, à une pression d'adsorption dite "pression haute";
- une étape de désorption de l'azote piégé par l'adsorbant, à une pression de désorption inférieure à la pression d'adsorption, dite "pression basse";
- une étape de repressurisation de la zone de séparation comprenant l'adsorbant, par passage de la pression basse à la pression haute; et l'oxygène produit étant récupéré durant la phase d'adsorption de l'azote.

De là, on comprend aisément que l'efficacité de séparation du mélange gazeux dépende de nombreux paramètres, tels la pression haute, la pression basse, le type de matériau adsorbant et l'affinité de celui-ci pour les composés à séparer, la composition du mélange gazeux à séparer, la température d'adsorption du mélange à séparer, la taille et la forme des billes d'adsorbant, la composition de ces billes, l'épaisseur du lit d'adsorption et le gradient de température s'établissant à l'intérieur dudit lit par exemples.

A ce jour, aucune loi de comportement générale n'a cependant pu être déterminée, car il est très difficile de relier ces différents paramètres entre eux.

En particulier, bien qu'il soit connu que l'épaisseur du lit d'adsorbant, la granulométrie de l'adsorbant et les volumes morts ont une influence non négligeable sur les performances de l'unité PSA, notamment du point de vue des pertes de charges, aucune méthode de sélection d'épaisseur du lit à partir de la granulométrie de l'adsorbant, tenant compte desdits volumes morts, n'a été décrite jusqu'à présent.

En d'autres termes, de nombreux documents se bornent à décrire des plages de valeurs de granulométrie et des plages de valeurs d'épaisseur de lit, mais sans qu'il n'existe de lien réel entre lesdites plages.

Par ailleurs, certains documents divulguent des combinaisons de granulométrie et temps de cycle et/ou d'épaisseur de lit.

Ainsi, le document EP-A-0480797 enseigne un procédé PSA mettant en oeuvre des billes d'adsorbant de diamètre de 0.4 mm à 1.7 mm et un temps de cycle de moins de 20 à 60 sec.

Par ailleurs, le document US-A-4,194,892 décrit un lit d'adsorbant d'épaisseur au plus égale à 2.4 m, des billes d'adsorbant de diamètre au plus égal à 0.9 mm et un temps de cycle de moins de 30 sec, alors que le document US-A-4,194,891 préconise un lit d'adsorbant d'épaisseur au plus égale à 1 m, des billes d'adsorbant de diamètre au plus égal à 0.9 mm et un temps de cycle de moins de 18 sec.

En outre, le document US-A-5,071,449 enseigne un lit d'adsorbant d'épaisseur de 0.15 m à 1 m, des billes d'adsorbant de diamètre de 0.2 mm à 1 mm et un temps de cycle de 6 sec à 60 sec, et le document « Gas Separation by Adsorption Processes », Yang, 1989, p.267, divulgue un lit d'adsorbant d'épaisseur de 1.8 m à 3 m, des billes d'adsorbant de diamètre égal à 1.6 mm et un temps de cycle de 3 min à 4 min.

On constate que, pour un même diamètre de billes, l'épaisseur du lit peut varier considérablement d'un document à l'autre, sans répondre réellement à un choix précis et sans prendre en considération les contraintes géométriques imposées par les volumes morts au sein de l'adsorbeur.

En outre, il est connu que les adsorbants utilisés dans les unités PSA sont chers et qu'il est alors nécessaire et souhaitable de réduire les quantités d'adsorbant utilisées, donc l'épaisseur des lits d'adsorbant, de manière à réduire le coût de production de l'oxygène.

Cependant, cette réduction de l'épaisseur des lits d'adsorbant ne doit pas aller à l'encontre des performances de l'unité PSA, notamment du rendement et de la productivité de ladite unité PSA.

Le but de la présente invention est donc de proposer un procédé PSA dont l'épaisseur de lit d'adsorbant :

- ne dépend essentiellement que de la granulométrie moyenne des particules d'adsorbant utilisées, notamment du diamètre lorsque l'adsorbant est sous forme de billes,
- prend en compte les contraintes géométriques des volumes morts,
- et n'ait pas une influence négative sur la consommation énergétique du procédé PSA.

En outre, le procédé de l'invention est de mise en oeuvre aisée à l'échelle industrielle et permet de réduire notablement les coûts de production de l'oxygène.

La présente invention concerne alors un procédé PSA de séparation d'un flux gazeux contenant essentiellement de l'oxygène et de l'azote, par adsorption préférentielle de l'azote sur au moins un lit d'épaisseur (e) d'un matériau adsorbant de granulométrie moyenne (d) inséré dans au moins une zone de séparation, dans lequel on choisit une épaisseur (e) de lit d'adsorbant telle que :

$$300 \leq \frac{e}{\sqrt{d}} \leq 1000$$

e et d étant exprimés en mm,
le matériau adsorbant étant choisi parmi les zéolites de type X ou A, et ladite zéolite comportant au moins 50 % de ses éléments $AlO_2$ associés à des cations choisis dans le groupe formé par les cations calcium, lithium, zinc, cuivre, manganèse, magnésium, nickel ou de tout métal alcalino-terreux; à l'exception d'une zéolite A comportant au moins 50% de ses éléments $AlO_2$ associés à des cations calcium.

Dans le cadre de la présente invention, la granulométrie moyenne est le diamètre hydraulique moyen des particules de matériau adsorbant.

De préférence, le rapport $(e/\sqrt{d})$ est compris entre 400 et 800.

Selon le mode de réalisation choisi, le procédé de l'invention peut inclure l'une ou plusieurs des caractéristiques suivantes :

- la pression haute d'adsorption est comprise entre $10^5$ Pa et $10^6$ Pa,
- la température d'alimentation ($T_{alim}$) est comprise entre 10°C et 60°C, de préférence entre 25°C et 45°C,
- le flux gazeux à séparer est de l'air,
- le temps de cycle est inférieur à 120 secondes, de préférence inférieur à 100 secondes,
- e est compris entre 0.1 m et 2 m, de préférence entre 0.2 m et 1.5 m,
- d est compris entre 0.1 mm et 5 mm, de préférence entre 0.2 mm et 3 mm,
- l'adsorbant est sous forme sensiblement sphérique, ovoïde, ovale, de bâtonnets ou analogues.

Ainsi que susmentionnée, il est connu que la granulométrie moyenne et l'épaisseur du lit d'adsorbant ont une forte influence sur les pertes de charges se produisant au sein du lit d'adsorbant.

Afin de limiter ces pertes de charges et donc de maintenir constantes les performances de l'unité PSA, il est alors souhaitable de diminuer l'épaisseur du lit d'adsorbant.

Cependant, il existe, au sein des adsorbeurs, des volumes morts dont il est impossible de s'affranchir et lesquels ont une influence négative sur les performances du procédé PSA, à savoir :

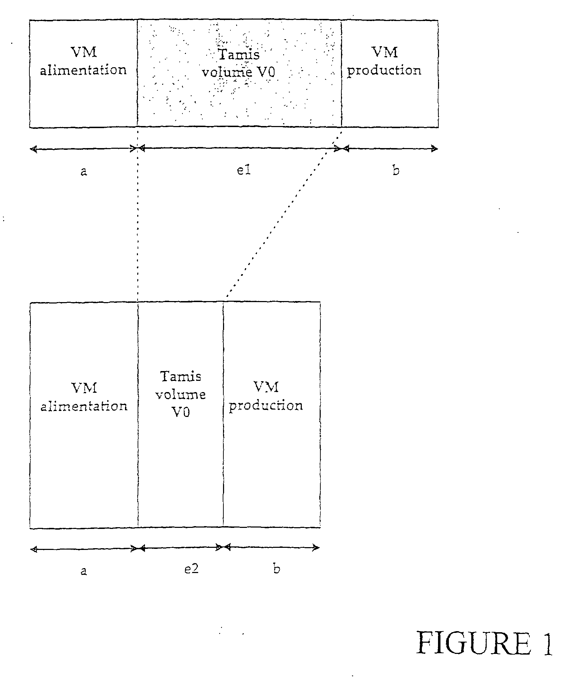

- en amont du lit d'adsorbant, c'est-à-dire côté alimentation, il existe un volume mort incompressible d'épaisseur a (VM alimentation sur Fig. 1) représentant notamment l'espace séparant la première vanne d'isolation en alimentation de l'adsorbeur et le début du lit d'adsorbant, le lit de particules d'un matériau dessiccant situé en amont du lit d'adsorbant, le système de distribution du gaz d'alimentation (air) dans l'adsorbeur...
- en aval du lit d'adsorbant, c'est-à-dire côté production, il existe aussi un volume mort incompressible d'épaisseur b (VM production sur Fig. 1) représentant notamment l'espace séparant la première vanne d'isolation en production de l'adsorbeur et la fin du lit d'adsorbant, le système de récupération du gaz de production (oxygène)...

De là, une diminution de l'épaisseur e du lit d'adsorbant (diminution d'une épaisseur e1 à une épaisseur e2) peut être schématisée ainsi que représenté sur la Figure 1, où l'on voit que, pour une épaisseur e donnée de tamis, les volumes morts représentent une part égale à : (a+b)/e, du volume Vo du lit d'adsorbant.

En d'autres termes, lorsque les épaisseurs a et b ne varient pas (volumes morts incompressibles), la proportion de volume mort par rapport au volume d'adsorbant augmente de manière hyperbolique lorsqu'on opère une diminution de l'épaisseur e du lit d'adsorbant.

Il s'ensuit que l'obtention ou la conservation de bonnes performances de l'unité PSA nécessite un dimensionnement précis de l'épaisseur de lit d'adsorbant à granulométrie moyenne donnée.

La présente invention va maintenant être décrite plus en détail à l'aide d'exemples et de figures donnés à titre illustratif, mais nullement limitatif de l'invention.

Exemples

Afin de vérifier l'efficacité d'un procédé PSA selon l'invention, une étude par simulation et une estimation économique de chaque essai de simulation ont été effectuées conformément au modèle exposé ci-après.

Les résultats suivants ont été simulés (en mode isotherme) à l'aide d'un programme de simulation adéquat. Le programme utilisé pour la simulation repose sur les principes de conservation de la masse, de conservation de l'enthalpie, de conservation de la quantité de mouvement et utilise le modèle de la Linear Driving Force (voir "Principles of adsorption and adsorption processes", John-Wiley & Sons, 1984; D. M. Ruthven, p. 242-243; ou "Pressure Swing Adsorption", VCS Publishers, 1994, p. 58-61) pour l'évaluation de la cinétique des transferts solide-gaz au sein de la masse d'adsorbant. De tels modèles de simulation sont notamment décrits dans Pressure Swing Adsorption, Ruthven, Farooq et Knaebel, VCH Publishers, 1994, pages 172-209; et dans Fluid Flow Through Packed Columns, S. Ergun, Chem. Engr. Prog., 48(2), 89 (1952). La résolution des équations peut, quant à elle, être réalisée par exemple au moyen du programme DIVPAG de la Bibliothèque Mathématique IMSL (International Mathematical & Statistical Library) commercialisé par la société Microsoft™; ou du programme ADSIM commercialisé par la société Aspentech™. L'homme du métier est parfaitement en mesure de choisir un programme de simulation adéquat parmi les nombreux programmes disponibles sur le marché et d'y introduire les données précédentes. Si besoin est, il peut également se reporter à l'article de D. G. Hartzog et S. Sircar; Adsorption, 1, 133-151 (1995), Sensitivity of PSA Process Performance to Input Variables, décrivant un programme similaire.

Dans tous les exemples suivants, le mélange gazeux à séparer contenant essentiellement de l'oxygène et de l'azote est de l'air.

En outre, les performances économiques du procédé PSA de l'invention ont été évaluées de la même manière pour tous les exemples ci-après, c'est-à-dire par simulation et en utilisant les relations suivantes.

L'indice d'énergie spécifique (ES) est donné par la formule suivante (à 20°C, pour un taux d'humidité relative de 70%) :

$$ES = \frac{(1 - R \cdot 0{,}2096 + 0{,}0166) \cdot \int_{cycle} KW(\Delta P) \cdot dt}{R \cdot 0{,}2096 \cdot \int_{cycle} Q(\Delta P) \cdot \dfrac{P_{asp} \cdot 273}{1{,}013 \cdot T_{asp}} \cdot dt} \cdot \frac{1}{0.95 \cdot 0.98}$$

dans laquelle:

- R est le rendement (%);
- t est la teneur en oxygène du gaz produit;
- $\Delta P$ est la différence de pression entre la pression d'aspiration ($P_{asp}$) et la pression de refoulement ($P_{ref}$) des machines, c'est-à-dire de la pompe à vide et du compresseur d'air.

Les pertes de charges adoptées pour le calcul sont de 1500 Pa (à $10^5$ Pa) à l'aspiration du compresseur d'air, de 4000 Pa (à $10^5$ Pa) au refoulement du compresseur d'air, de 2000 Pa (à $10^5$ Pa) à l'aspiration de la pompe à vide et de 1500 Pa (à $10^5$ Pa) au refoulement de la pompe à vide;

- Kw est la puissance instantanée à l'arbre et Q est le débit instantané des machines; ces valeurs sont données par les caractéristiques techniques desdites machines;
- le rendement moteur est de 95%;

- le rendement de la transmission est de 98%;
- $T_{asp}$ est la température de l'air d'aspiration, c'est-à-dire la température de l'air entrant dans la machine.

L'indice d'investissement ($I_2$) est calculé à partir d'un indice d'investissement ($I_1$) de référence et est donné par la formule suivante:

$$I_2 = \sum_{i=1}^{12} (C1,i) \cdot \left( \frac{Y2,i}{(Y1,i)^{\alpha i}} \right)^{\alpha i}$$

dans laquelle :

$$\sum_{i=1}^{12} (C1,i) = I_1$$

· est l'investissement de référence calculé à partir des différents postes de dépense indiqués dans le Tableau I ci-après.

· Y2,i et Y1,i sont les paramètres de coût indiqués dans le Tableau I.

· $\alpha i$ représente la puissance d'extrapolation, qui rend compte des économies réalisées sur chaque poste de dépense (cf. Tableau I).

TABLEAU I

| POSTE DE DEPENSE | COÛT | $\alpha i$ | Yi |
|---|---|---|---|
| TUYAUTERIE, ARMATURES, ADSORBEUR, SUPPORTS... | C0,1 | $\alpha 1$ | volume des adsorbeurs |
| ADSORBANT | C0,2 | $\alpha 2$ | productivité prix du tamis |
| VANNES | C0,3 | $\alpha 3$ | rendement |
| POMPE A VIDE | C0,4 | $\alpha 4$ | débit pompe à vide |
| COMPRESSEUR D'AIR EN ENTREE DU PSA | C0,5 | $\alpha 5$ | débit compresseur |
| COMPRESSEUR D'OXYGENE EN SORTIE DU PSA | C0,6 | $\alpha 6$ | - |
| REGULATION, CONTROLE, AUTOMATE | C0,7 | $\alpha 7$ | - |
| INGENIERIE | C0,8 | $\alpha 8$ | - |
| TRANSPORT | C0,9 | $\alpha 9$ | volume des adsorbeurs |
| INSTALLATION ET MISE EN ROUTE | C0,10 | $\alpha 10$ | volume des adsorbeurs |
| FRAIS GENERAUX | C0,11 | $\alpha 11$ | - |
| DIVERS | C0,12 | $\alpha 12$ | - |

L'indice du coût de l'oxygène ($Co_2$) est évalué au moyen de la formule suivante:

$$Co_2 = \frac{ES \times Pe + CC \times I}{Pan}$$

où

- ES est l'indice d'énergie spécifique;
- I est l'indice d'investissement;
- Pe est le prix moyen de l'énergie (électricité...);
- CC est un paramètre de coût incluant l'amortissement de l'installation et de la maintenance;
- Pan est la production annuelle d'oxygène produit.

Dans les exemples suivants, l'étude des performances du procédé PSA a été effectuée pour un cycle donné et à machines constantes.

Les cycles mis en oeuvre ont une durée totale de 3 x 15 secondes ou 3 x 30 secondes (3 adsorbeurs fonctionnant en parallèle) et peuvent être schématisés de la façon suivante:

- une phase de production proprement-dite à une pression haute de l'ordre de $1,1.10^5$ Pa, c'est-à-dire d'adsorption de l'azote et de récupération de l'oxygène;
- une phase d'équilibrage bas à co-courant;
- une phase de purge jusqu'à une pression basse, de l'ordre de $0,3.10^5$ Pa, c'est-à-dire, de désorption de l'azote emprisonné par le lit d'adsorbant et d'évacuation dudit azote,
- une phase d'élution;
- une phase de recompression par de l'oxygène produit, c'est-à-dire de passage de la pression basse à la pression haute en vue d'un nouveau cycle de séparation.

Les différentes simulations ont été réalisées à machines constantes, c'est-à-dire que les machines (pompe à vide et soufflante) ont été choisies de manière à fournir des pressions haute et basse, respectivement, de $1,1. 10^5$ Pa et de $0,3. 10^5$ Pa, en conditions standard, à savoir pour une température d'aspiration de l'air de 20°C ($T_{asp}$) et une température de l'air d'alimentation des adsorbeurs de 35°C ($T_{alim}$). La température d'aspiration de 20°C ($T_{asp}$) correspond, en fait, à la température moyenne d'une région tempérée, telle l'Europe.

Les matériaux adsorbants utilisés dans les exemples ci-après sont une zéolite de type A comportant environ 80 % de ces éléments $AlO_2$ associés à des cations calcium (ci-après : CaA). Cette zéolite, couramment accessible dans le commerce, est insérée sous forme d'un lit unique d'épaisseur e (en mm) au sein des trois adsorbeurs; ledit lit de zéolite étant précédé et suivi des volumes morts précités.

Les résultats obtenus sont donnés en indices.

Exemple 1

Dans cet exemple, les épaisseurs minimales a et b (cf. Fig. 1) des volumes morts côté alimentation (Vm alimentation) et côté production (VM production), respectivement, sont fixées à : a = 240 mm et b = 120 mm, ce qui correspond à 34% et 23%, respectivement, en volume de l'adsorbant pour un lit ayant une épaisseur de 700 mm. Ici, comme en pratique, on cherche à diminuer au maximum l'épaisseur ces volumes dont l'influence est négative.

En outre, différentes épaisseurs de lits sont testées pour des particules d'adsorbant ayant une granulométrie moyenne de 0.5 mm, 1 mm, 1.5 mm et 2 mm, lesdites particules étant des billes de forme sensiblement sphérique.

Les résultats obtenus sont consignés dans les tableaux II (pour temps cycles 3 x 15 sec) à IX (pour temps cycles 3 x 30 sec) suivants; l'indice de coût de l'oxygène produit est donné pour une unité PSA produisant 100 tonnes de O2 par jour.

Tableau II

| Diamètre d moyen des billes : 0.5 mm   Temps cycle 3 x 15 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 283 | 100 | 104 | 108 | 104 |
| 400 | 566 | 111 | 100 | 100 | 100 |
| 700 | N.D. | N.D. | N.D. | N.D. | N.D. |
| 1 000 | N.D. | N.D. | N.D. | N.D. | N.D. |
| 1 400 | N.D. | N.D. | N.D. | N.D. | N.D. |
| N.D. : non déterminé. | | | | | |

Tableau III

| Diamètre d moyen des billes : 1 mm Temps cycle 3 x 15 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 200 | 83 | 100 | 118 | 111 |
| 400 | 400 | 96 | 103 | 103 | 101 |
| 700 | 700 | 100 | 100 | 100 | 100 |
| 1 000 | 1000 | 97 | 90 | 106 | 106 |
| 1 400 | 1400 | N.D. | N.D. | N.D. | N.D. |
| N.D. : non déterminé. | | | | | |

Tableau IV

| Diamètre d moyen des billes: 1.5 mm Temps cycle 3 x 15 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 163 | 100 | 112 | 122 | 115 |
| 400 | 327 | 117 | 119 | 106 | 104 |
| 700 | 572 | 124 | 120 | 100 | 100 |
| 1 000 | 816 | 125 | 115 | 101 | 101 |
| 1 400 | 1143 | 117 | 100 | 111 | 110 |

Tableau V

| Diamètre d moyen des billes: 2 mm Temps cycle 3 x 15 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 141 | 100 | 100 | 125 | 116 |
| 400 | 283 | 117 | 107 | 107 | 104 |
| 700 | 495 | 126 | 109 | 100 | 100 |
| 1 000 | 707 | 128 | 107 | 100 | 100 |
| 1 400 | 990 | 126 | 100 | 104 | 104 |

Tableau VI

| Diamètre d moyen des billes : 0.5 mm Temps cycle 3 x 30 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 283 | 102 | 147 | 110 | 104 |
| 400 | 566 | 114 | 144 | 100 | 100 |
| 700 | 990 | 115 | 129 | 102 | 104 |
| 1 000 | 1414 | 100 | 100 | 121 | 120 |
| 1 400 | N.D. | N.D. | N.D. | N.D. | N.D. |
| N.D. : non déterminé. | | | | | |

Tableau VII

| Diamètre d moyen des billes :     1 mm     Temps cycle 3 x 30 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 200 | 85 | 102 | 116 | 107 |
| 400 | 400 | 96 | 103 | 103 | 101 |
| 700 | 700 | 100 | 100 | 100 | 100 |
| 1 000 | 1000 | 101 | 96 | 101 | 102 |
| 1 400 | 1400 | 99 | 88 | 105 | 106 |

Tableau VIII

| Diamètre d moyen des billes:     1.5 mm     Temps cycle 3 x 30 s | | | | | |
|---|---|---|---|---|---|
| Epaisseur du lit (e en mm) | Rapport e / √d | Rendement (R) | Productivité (P) | Energie spécifique (ES) | coût $O_2$ pour 100 t/j |
| 200 | 163 | 100 | 106 | 118 | 109 |
| 400 | 327 | 113 | 107 | 105 | 102 |
| 700 | 572 | 118 | 107 | 101 | 100 |
| 1 000 | 816 | 120 | 104 | 100 | 100 |
| 1 400 | 1143 | 120 | 100 | 101 | 102 |

Tableau IX

| Diamètre d moyen des billes:     2 mm     Temps cycle 3 x 30 s | | | | | |
|---|---|---|---|---|---|
| Epaisseur du lit (e en mm) | Rapport e / √d | Rexndement (R) | Productivité (P) | Energie spécifique (ES) | coût $O_2$ pour 100 t/j |
| 200 | 141 | 100 | 102 | 120 | 110 |
| 400 | 283 | 113 | 104 | 107 | 103 |
| 700 | 495 | 118 | 104 | 102 | 100 |
| 1 000 | 707 | 121 | 103 | 100 | 100 |
| 1 400 | 990 | 121 | 100 | 100 | 101 |

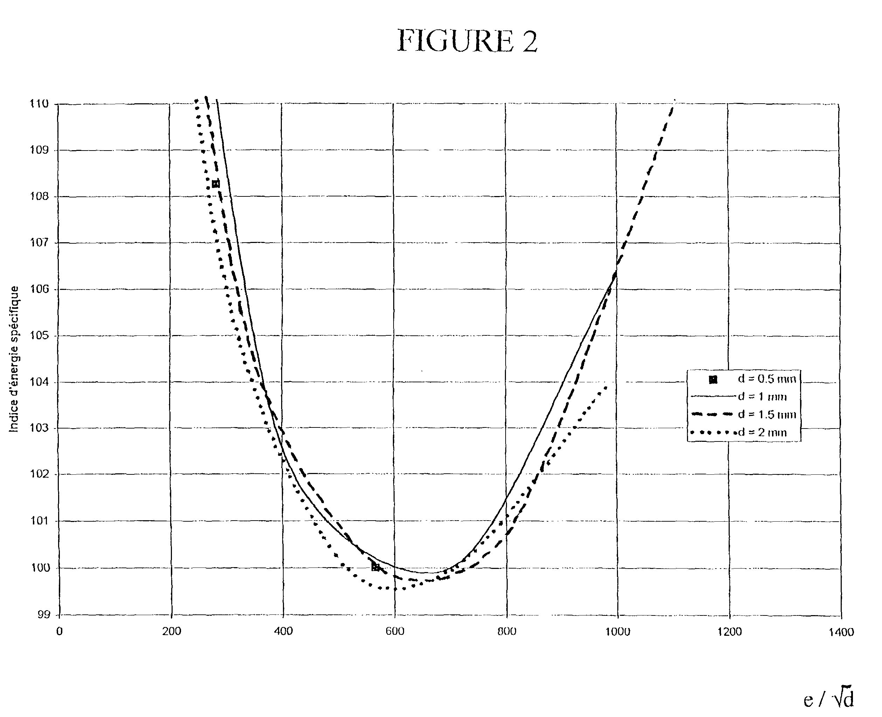

Afin de permettre une meilleure compréhension des résultats obtenus, les indices de coût de l'oxygène produit et d'énergie spécifique (ES) ont été reportés sur les figures 2 à 4, lesquelles représentent, respectivement :

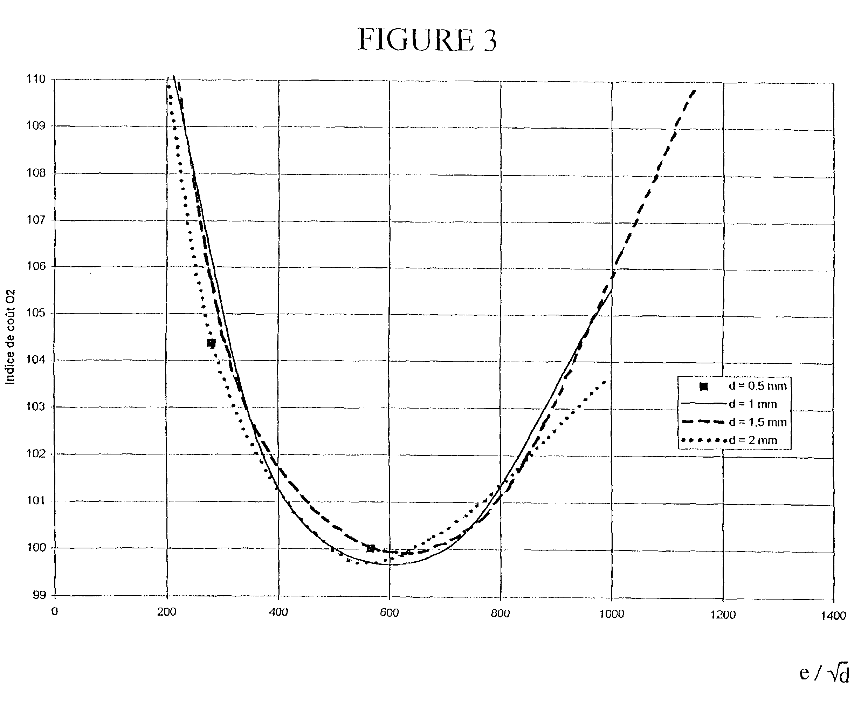

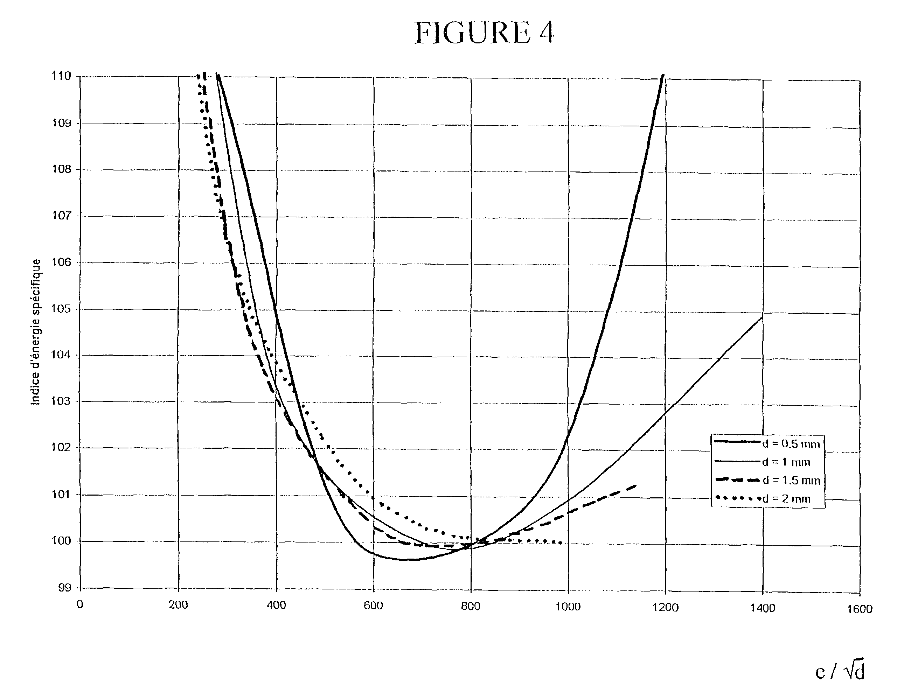

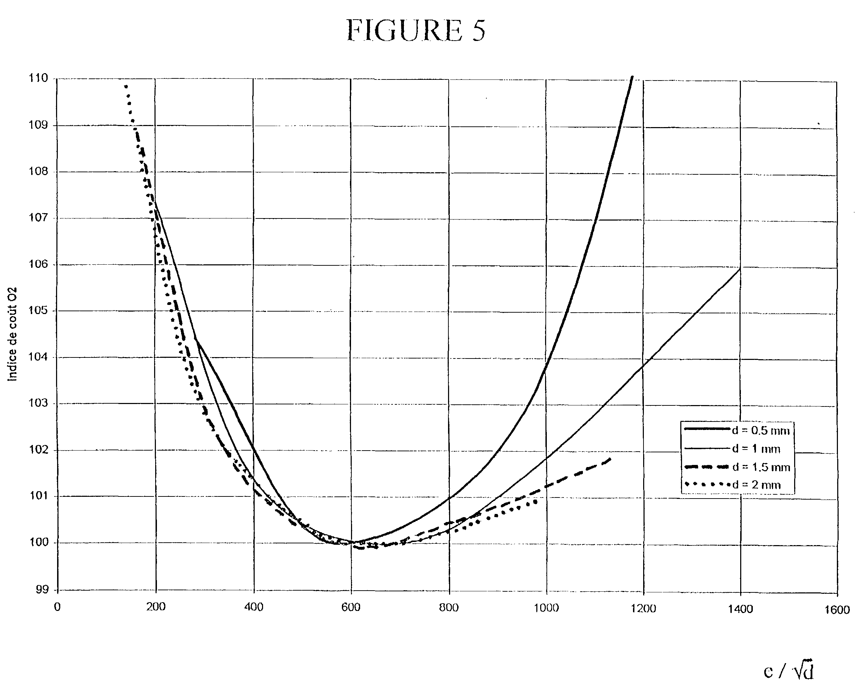

- l'indice d'énergie spécifique (ES) en fonction de la valeur du rapport (e / √d) pour un cycle de 3 x 15 secondes (Fig. 2),
- l'indice du coût de l'oxygène ($O_2$) produit en fonction de la valeur du rapport (e / √d) pour un cycle de 3 x 15 secondes (Fig. 3),
- l'indice d'énergie spécifique (ES) en fonction de la valeur du rapport (e /√d) pour un cycle de 3 x 30 secondes (Fig. 4), et
- l'indice du coût de l'oxygène ($O_2$) produit en fonction de la valeur du rapport (e /√d) pour un cycle de 3 x 30 secondes (Fig. 5).

Il apparaît immédiatement au vu de ces différentes courbes que l'énergie spécifique est minimale, de même que le coût de l'oxygène produit, pour des valeurs du rapport (e / √d) comprises entre 300 et 1000, de préférence entre 400 et 800, et ce, quelle que soit la durée du cycle du procédé PSA (3 x30 sec ou 3 x 15 sec).

En d'autres termes, ces différents essais mettent en évidence, de façon surprenante, que lorsqu'on diminue le temps de cycle, il n'est pas forcément nécessaire de diminuer aussi l'épaisseur du lit d'adsorbant et que, au contraire, une telle diminution de l'épaisseur du lit d'adsorbant est susceptible d'engendrer, dans certains cas, des effets négatifs sur les performances du procédé PSA mis en oeuvre.

**Revendications**

**1.** Procédé PSA de séparation d'un flux gazeux contenant essentiellement de l'oxygène et de l'azote, par adsorption préférentielle de l'azote sur au moins un lit d'épaisseur (e) d'un matériau adsorbant de granulométrie moyenne (d) inséré dans au moins une zone de séparation, dans lequel on choisit une épaisseur (e) de lit d'adsorbant telle que :

$$300 \leq \frac{e}{\sqrt{d}} \leq 1000$$

e et d étant exprimés en mm,
le matériau adsorbant étant choisi parmi les zéolites de type X,
et ladite zéolite comportant au moins 50 % de ses éléments $AlO_2$ associés à des cations choisis dans le groupe formé par les cations calcium, lithium, zinc, cuivre, manganèse, magnésium, nickel ou de tout métal alcalino-terreux.

**2.** Procédé PSA de séparation d'un flux gazeux contenant essentiellement de l'oxygène et de l'azote, par adsorption préférentielle de l'azote sur au moins un lit d'épaisseur (e) d'un matériau adsorbant de granulométrie moyenne (d) inséré dans au moins une zone de séparation, dans lequel on choisit une épaisseur (e) de lit d'adsorbant telle que :

$$300 \leq \frac{e}{\sqrt{d}} \leq 1000$$

e et d étant exprimés en mm,
le matériau adsorbant étant choisi parmi les zéolites de type A,
et ladite zéolite comportant au moins 50 % de ses éléments $AlO_2$ associés à des cations choisis dans le groupe formé par les cations lithium, zinc, cuivre, manganèse, magnésium, nickel ou de tout métal alcalino-terreux à l'exception du calcium.

**3.** Procédé selon l'une des revendications 1 ou 2, caractérisé en ce que le rapport $(e/\sqrt{d})$ est compris entre 400 et 800.

**4.** Procédé selon l'une des revendications 1 à 3, caractérisé en ce que le temps de cycle est inférieur à 120 secondes.

**5.** Procédé selon l'une des revendications 1 à 4, caractérisé en ce que e est compris entre 0.1 m et 2 m.

**6.** Procédé selon l'une des revendications 1 à 5, caractérisé en ce que d est compris entre 0.1 mm et 5 mm.

**7.** Procédé selon l'une des revendications 1 à 6, caractérisé en ce que l'adsorbant est sous forme sensiblement sphérique, ovoïde, ovale ou de bâtonnet.

**8.** Procédé selon l'une des revendications 1 à 7, caractérisé en ce que le flux gazeux à séparer est de l'air.

**9.** Procédé selon l'une des revendications 1 à 3, caractérisé en ce que le temps de cycle est inférieur à 100 secondes.

**10.** Procédé selon l'une des revendications 1 à 4, caractérisé en ce que e est compris entre 0.2 m et 1.5 m.

**11.** Procédé selon l'une des revendications 1 à 5, caractérisé en ce que d est compris entre 0.2 mm et 3 mm.

**Patentansprüche**

1. Druckwechseladsorptionsverfahren zur Trennung eines im wesentlichen Sauerstoff und Stickstoff enthaltenden Gasstroms durch bevorzugte Adsorption von Stickstoff an mindestens einer eine Dicke (e) aufweisenden Schüttung aus einem Adsorptionsmittel mit einer mittleren Teilchengröße (d) in mindestens einer Trennzone, bei dem man die Dicke (e) der Adsorptionsmittelschüttung so wählt, daß :

$$300 \leq \frac{e}{\sqrt{d}} \leq 1000$$

worin e und d in mm angegeben sind,
wobei man das Adsorptionsmittel unter Zeolithen des Typs X auswählt
und mindestens 50% der $AlO_2$-Einheiten des Zeoliths mit Kationen aus der Gruppe bestehend aus Kationen des calciums, Lithiums, Zinks, Kupfers, Mangans, Magnesiums, Nickels und aller Erdalkalimetalle assoziiert sind.

2. Druckwechseladsorptionsverfahren zur Trennung eines im wesentlichen Sauerstoff und Stickstoff enthaltenden Gasstroms durch bevorzugte Adsorption von Stickstoff an mindestens einer eine Dicke (e) aufweisenden Schüttung aus einem Adsorptionsmittel mit einer mittleren Teilchengröße (d) in mindestens einer Trennzone, bei dem man die Dicke (e) der Adsorptionsmittelschüttung so wählt, daß:

$$300 \leq \frac{e}{\sqrt{d}} \leq 1000$$

worin e und d in mm angegeben sind,
wobei man das Adsorptionsmittel unter Zeolithen des Typs A auswählt
und mindestens 50% der $AlO_2$-Einheiten des Zeoliths mit Kationen aus der Gruppe bestehend aus Kationen des Lithiums, Zinks, Kupfers, Mangans, Magnesiums, Nickels und aller Erdalkalimetalle außer Calcium assoziiert sind.

3. Verfahren nach Anspruch 1 oder 2, dadurch gekennzeichnet, daß das Verhältnis (e/√d) zwischen 400 und 800 liegt.

4. Verfahren nach einem der Ansprüche 1 bis 3, dadurch gekennzeichnet, daß die Zykluszeit weniger als 120 Sekunden beträgt.

5. Verfahren nach einem der Ansprüche 1 bis 4, dadurch gekennzeichnet, daß e zwischen 0,1 m und 2 m liegt.

6. Verfahren nach einem der Ansprüche 1 bis 5, dadurch gekennzeichnet, daß d zwischen 0,1 mm und 5 mm liegt.

7. Verfahren nach einem der Ansprüche 1 bis 6, dadurch gekennzeichnet, daß das Adsorptionsmittel im wesentlichen kugelförmig, ovoid, oval oder stäbchenförmig ist.

8. Verfahren nach einem der Ansprüche 1 bis 7, dadurch gekennzeichnet, daß es sich bei dem zu trennenden Gasstrom um Luft handelt.

9. Verfahren nach einem der Ansprüche 1 bis 3, dadurch gekennzeichnet, daß die Zykluszeit weniger als 100 Sekunden beträgt.

10. Verfahren nach einem der Ansprüche 1 bis 4, dadurch gekennzeichnet, daß e zwischen 0,2 m und 1,5 m liegt.

11. Verfahren nach einem der Ansprüche 1 bis 5, dadurch gekennzeichnet, daß d zwischen 0,2 mm und 3 mm liegt.

**Claims**

1. PSA process for the separation of a gas stream, containing essentially oxygen and nitrogen, by preferential adsorption of the nitrogen on at least one bed, having a thickness (e), of an adsorbent material of mean particle size (d) inserted into at least one separation zone, in which process an adsorbent-bed thickness (e) is chosen such that:

$$300 \leq e/\sqrt{d} \leq 1000$$

e and d both being expressed in mm,
the adsorbent material being chosen from X-type zeolites and the said zeolite having at least 50% of its $AlO_2$ elements associated with cations chosen from the group formed by calcium, lithium, zinc, copper, manganese, magnesium and nickel cations or by cations of any alkaline-earth metal.

2. PSA process for the separation of a gas stream, containing essentially oxygen and nitrogen, by preferential adsorption of the nitrogen on at least one bed, having a thickness (e), of an adsorbent material of mean particle size (d) inserted into at least one separation zone, in which process an adsorbent-bed thickness (e) is chosen such that:

$$300 \leq e/\sqrt{d} \leq 1000$$

e and d both being expressed in mm,
the adsorbent material being chosen from A-type zeolites and the said zeolite having at least 50% of its $AlO_2$ elements associated with cations chosen from the group formed by lithium, zinc, copper, manganese, magnesium and nickel cations or by cations of any alkaline-earth metal with the exception of calcium.

3. Process according to either of Claims 1 and 2, characterized in that the $(e/\sqrt{d})$ ratio is between 400 and 800.

4. Process according to one of Claims 1 to 3, characterized in that the cycle time is less than 120 seconds.

5. Process according to one of Claims 1 to 4, characterized in that e is between 0.1 m and 2 m.

6. Process according to one of Claims 1 to 5, characterized in that d is between 0.1 and 5 mm.

7. Process according to one of Claims 1 to 6, characterized in that the adsorbent is substantially in the form of spheres, ovoids, ovals or rods.

8. Process according to one of Claims 1 to 7, characterized in that the gas stream to be separated is air.

9. Process according to one of Claims 1 to 3, characterized in that the cycle time is less than 100 seconds.

10. Process according to one of Claims 1 to 4, characterized in that e is between 0.2 m and 1.5 m.

11. Process according to one of Claims 1 to 5, characterized in that d is between 0.2 mm and 3 mm.

FIGURE 1

FIGURE 2

FIGURE 3

FIGURE 4

FIGURE 5

Indice de coût O2

c / √d̄

d = 0.5 mm
d = 1 mm
d = 1.5 mm
d = 2 mm